# EUROPÄISCHE PATENTSCHRIFT

(11) **EP 3 321 113 B1**
(45) Veröffentlichungstag und Bekanntmachung des Hinweises auf die Patenterteilung: **23.09.2020**
(21) Anmeldenummer: 17200050.7
(22) Anmeldetag: 06.11.2017
(51) Int. Cl.: B60H 1/34

(54) **LUFTAUSSTRÖMER**
AIR VENT
DISPOSITIF D'ÉCOULEMENT D'AIR

(30) Priorität: 14.11.2016 DE 102016121790
(43) Veröffentlichungstag der Anmeldung: 16.05.2018
(73) Patentinhaber: Dr. Schneider Kunststoffwerke GmbH, 96317 Kronach-Neuses (DE)
(72) Erfinder: Uhlenbusch, Olaf, 96275 Marktzeuln (DE); Grünbeck, Thomas, 96358 Teuschnitz (DE); Grüdl, Alexander, 96358 Teuschnitz (DE)

(56) Entgegenhaltungen:
- EP-A1- 1 724 136
- EP-A1- 2 881 272
- WO-A1-2013/128763
- DE-T2- 69 309 973

## Beschreibung

Es wird ein Luftausströmer beschrieben, der einen Luftkanal aufweist, in dem mindestens eine erste Lamelle verschwenkbar angeordnet ist. Der Luftkanal weist ferner eine Luftaustrittsöffnung auf, über welche die Luft ausgegeben wird.

Luftausströmer dienen zur Ablenkung von ausgegebener Luft, die von einer Klimaanlage oder einer anderen Belüftungseinrichtung zur Verfügung gestellt wird. Luftausströmer werden insbesondere bei Fahrzeugen dazu verwendet, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein. Bei Luftausströmern kann in der Regel neben der Steuerung der Ablenkung von ausgegebener Luft, bspw. von einer Klimaanlage, auch die Menge an ausgegebener Luft geregelt werden. Die Menge der zugeführten Luft wird über eine Steuereinrichtung geregelt, die bspw. mit einer Bedieneinrichtung zum Verschwenken von Lamellen oder getrennt von einer solchen Bedieneinrichtung neben einer Ausströmöffnung angeordnet ist. Luftausströmer können in einem Fahrzeugarmaturenbrett oder im Bereich der A-, B- oder C- Säule oder am Dach eines Kraftfahrzeuges angeordnet sein.

### Stand der Technik

Konventionelle Luftausströmer weisen in der Regel Lamellen auf, die zur Luftablenkung dienen. Über die Lamellen kann die ausgegebene Luft abgelenkt werden. Das Ausmaß einer Luftablenkung hängt von einer Vielzahl von Faktoren ab. Diese sind bspw. die Abmaße der Lamellen, die Anzahl der Lamellen, der Grad um welchen die Lamellen verschwenkt werden können etc.

Luftausströmer sollen zudem ein optisch ansprechendes Erscheinungsbild aufweisen. Hierzu sind Luftausströmer bekannt, die im Vergleich zu ihrer Länge eine geringe Höhe aufweisen. Eine Luftablenkung ist daher begrenzt.

Um eine definierte Luftablenkung zu erreichen, weisen die aus dem Stand der Technik bekannten Luftausströmer eine solche Höhe auf, dass eine bestimmte Anzahl an Lamellen angeordnet werden kann. Die Anzahl der Lamellen legt somit auch die maximale Luftablenkung fest. In letzter Zeit werden jedoch vermehrt Luftausströmer mit einer relativ geringen Höhe bei einer demgegenüber größeren Breite in Kraftfahrzeugen eingesetzt. Die Luftablenkung über sogenannte Vertikallamellen wird dabei nicht beeinträchtigt, da aufgrund der großen Breite Platz für eine Vielzahl von Lamellen ist. Es bestehen aber Probleme bei der Luftablenkung, welche über die Lamellen bewerkstelligt wird, die sich über die Breite des Luftausströmers erstrecken. Bei solchen Luftausströmern können häufig nur wenige breite Lamellen, in der Regel maximal drei Lamellen, angeordnet werden. Die maximale Luftablenkung ist dadurch begrenzt.

Luftausströmer mit einer noch geringeren Höhe können baulich bedingt nur eine sich über die Breite des Luftausströmers erstreckende Lamelle aufweisen. Es kommt dann aber zu einer unzureichenden Luftablenkung nach oben und nach unten.

Um dieses Problem zu beheben wurde bereits vorgeschlagen sogenannte "Flex"-Lamellen vorzusehen. "Flex"-Lamellen bestehen aus einem flexiblen Material und ragen verhältnismäßig weit in den Luftausströmer hinein, um eine größere Ablenkfläche bereitzustellen. Die Flexlamellen sind so ausgebildet, dass diese über eine Kraft verformbar sind und wieder in ihre ursprüngliche Ausrichtung zurückkehren, wenn keine Kraft mehr ausgeübt wird. Solche Ausführungen sind als nachteilig zu betrachten, da stets eine Kraft aufgebracht werden muss, wenn eine Luftablenkung erzielt werden soll. Zudem ragen die Flexlamellen weit in den Luftkanal hinein und benötigen gegenüber bekannten Luftausströmern einen größeren Bauraum.

Ferner sind längsgeteilte Lamellen für sogenannte Fugenausströmer bekannt. Die geteilten Lamellen ragen ebenfalls weit in den Luftkanal hinein.

Ein Luftausströmer mit längsgeteilten Lamellen ist bspw. aus DE 10 2006 002 663 A1 bekannt. DE 10 2006 002 663 A1 offenbart eine Ausströmdüse für ein Fluid mit einem von einem Gehäuse gebildeten Strömungskanal und mehrere im Bereich einer Austrittsöffnung vorgesehene, parallel angeordnete Lamellen zur Ausrichtung eines Fluidstroms. Die Lamellen sind zur gemeinsamen Verschwenkbarkeit mit einer Koppelstange mechanisch gekoppelt. Die Koppelstange verbindet die vorderen Lamellenteile, wobei die hinteren Lamellenteile in als Langlöcher ausgebildeten Führungskulissen im Gehäuse gelagert sind.

Zudem wird oft gefordert, bewegliche Komponenten des Luftausströmers von außen nicht zugänglich bzw. nicht sichtbar anzuordnen. Dies dient sowohl dem Schutz der Komponenten des Luftausströmers als auch optischen Gesichtspunkten.

Aus EP 2 881 272 A1 und WO 2013/128763 A1 sind Luftausströmer bekannt, die Ablenkelemente in Form von Klappen oder drehbaren Zylindersegmenten aufweisen. Diese Ablenkelemente sind über eine Koppelplatte mit einer mittig gelagerten Lamelle gekoppelt, so dass bei einem Verschwenken der Lamelle zwangsweise eine Verlagerung der beiden über die Koppelplatte gekoppelten Ablenkelemente erfolgt.

EP 1 724 136 A1 offenbart einen konventionellen Luftausströmer mit einer Blende, welche eine Luftaustrittsöffnung überspannende Stege aufweist, die sich im Bereich der Schwenkachsen von dahinter gelagerten Lamellen befinden.

DE 693 09 973 T2 offenbart einen Luftausströmer mit einem komplexen Aufbau, wobei vertikale Lamellen mehrere orthogonal abstehende Flügel aufweisen, an welchen Luftleitflächen parallel zu einer Längsachse der Flügel über ein Filmscharnier schwenkbar gelagert sind.

### Aufgabe

Es ist daher Aufgabe einen Luftausströmer anzugeben, der eine Luftablenkung in einem weiten Bereich bereitstellt sowie optischen und sicherheitsrelevanten Aspekten Rechnung trägt. Zudem soll eine alternative Lösung zu den aus dem Stand der Technik bekannten Luftausströmern angegeben werden.

### Lösung

Die Aufgabe wird durch einen Luftausströmer mit den in Anspruch 1 angegeben technischen Merkmalen gelöst. Vorteilhafte Weiterbildungen sind in den Unteransprüchen im Detail angegeben.

Ein die vorstehende Aufgabe lösender Luftausströmer weist einen Luftkanal, in dem mindestens eine erste Lamelle verschwenkbar angeordnet ist, mit einer Luftaustrittsöffnung auf, wobei
- parallel zu der mindestens einen ersten Lamelle an den gegenüberliegenden Seiten des Luftkanals jeweils mindestens ein Ablenkelement angeordnet ist,
- im Bereich der Luftaustrittsöffnung mindestens ein Steg angeordnet ist, der parallel zu der mindestens einen ersten Lamelle verläuft,
- die mindestens eine erste Lamelle im Bereich des mindestens einen Stegs verschwenkbar ist,
- die Ablenkelemente in den Luftkanal ragen und nicht miteinander gekoppelt sind, und
- die Ablenkelemente
   a) starr ausgebildete Rampen (27),
   b) durch die mindestens eine erste Lamelle (24) verformbar, oder
   c) durch die mindestens eine erste Lamelle (24) verschwenkbar gelagerte Schlepplamellen (26) sind, die eine erste Luftleitfläche und eine zweite Luftleitfläche aufweisen.

Die Ablenkelemente ragen in den Luftkanal hinein und verengen damit den Luftkanal, was zu einer erhöhten Austrittsgeschwindigkeit der ausgegebenen Luft führt. Zudem kann die ausströmende Luft über die Ablenkelemente zu einem Spotstrahl gebündelt werden.

Ist die mindestens eine erste Lamelle maximal verschwenkt worden, so wird die Ablenkung und ggf. Bündelung der Luft mindestens über ein Ablenkelement aufrechterhalten. In den Luftkanal einströmende Luft wird über die verschwenkte erste Lamelle abgelenkt. Über mindestens ein Ablenkelement wird die Luft entsprechend abgelenkt und zu der verschwenkten ersten Lamelle geleitet, so dass eine (Vor-)Ablenkung der Luft bereitgestellt wird.

Vorteilhafterweise werden hierdurch Luftausströmer bereitgestellt, die nur mit einer einzelnen oder zwei ersten Lamellen eine Luftablenkung in einem großen Ablenkbereich bereitstellen. Der Luftausströmer benötigt gegenüber aus dem Stand der Technik bekannten Ausführungen einen geringeren Bauraum und übertrifft dabei die Ablenkung der ausgegeben Luft.

Die verschwenkbare Anordnung der mindestens einen ersten Lamelle im Bereich des Stegs im Bereich der Luftaustrittsöffnung, wobei die mindestens eine erste Lamelle in Luftströmungsrichtung dem Steg vorgelagert ist, bietet den Vorteil, dass die mindestens eine erste Lamelle nicht aus dem Luftaustrittsbereich hervorragt. Der Luftausströmer weist somit ein ansprechendes Erscheinungsbild auf, da die beweglichen Komponenten versteckt angeordnet sind. Anstelle eines Stegs können auch mehrere Stege vorgesehen sein. Hinter jedem dieser Stege kann eine erste Lamelle verschwenkbar angeordnet sein. In der Regel ist die Anzahl der Stege dann begrenzt, wenn der Luftausströmer als sogenannter Fugenausströmer ausgebildet ist und im Vergleich zu seiner Breite eine relativ geringe Höhe aufweist. In solchen Ausführungen weist der Luftausströmer oftmals maximal zwei Stege und zwei erste Lamellen auf.

Ein Steg verhindert oder erschwert zudem das Eindringen von Gegenständen oder Körperteilen. Dadurch werden sowohl der Luftausströmer vor einer Beschädigung als auch Personen vor Verletzungen geschützt. Ein Steg ist auch aus optischen Gründen vorteilhaft, da dieser einen relativ hohen Luftschacht bzw. Luftkanal optisch teilen kann, was einen eleganten Eindruck erweckt.

Die mindestens eine erste Lamelle kann beispielweise direkt an dem Steg schwenkbar gelagert sein. Die mindestens eine erste Lamelle kann in weiteren Ausführungen aber auch an gegenüberliegenden Seitenwänden des Gehäuses des Luftausströmers schwenkbar gelagert sein. Hierzu kann die mindestens eine erste Lamelle Lagerzapfen aufweisen, die in entsprechenden Öffnungen in den Seitenwänden aufgenommen sind.

In Ausführungen mit zwei ersten Lamellen können diese zusätzliche abstehende Stifte aufweisen, die in Führungskulissen aufgenommen sind und ein gemeinsames Verlagern, bspw. zusammen mit einem Koppelelement, unterstützen. Ein solches Koppelelement kann sich bspw. über die Länge der ersten Lamellen erstrecken und die beiden ersten Lamellen miteinander verbinden. Zudem kann dieses Koppelelement so ausgebildet sein, dass es eine Luftzufuhr in einen oberen und einen unteren Bereich bereitstellt. Über die Führungskulissen kann dabei sichergestellt werden, dass das Koppelelement in sämtlichen Stellungen der ersten Lamellen seine Ausrichtung beibehält, so dass die Funktion der Luftverteilung aufrechterhalten wird.

Die Ablenkelemente können rampenartig ausgeführt sein und den Querschnitt des Luftkanals verengen. Die Ablenkelemente sind starr ausgebildet und sind in Luftströmungsrichtung der mindestens einen ersten Lamelle vorgelagert. Die Ablenkelemente lenken die Luft in sämtlichen Stellungen der mindestens einen ersten Lamelle ab. Hierdurch wird eine Unterstützung der Luftablenkung durch die mindestens eine erste Lamelle erreicht, wodurch die Luftablenkung verbessert wird.

Die Ablenkelemente können in alternativen Ausführungsformen aus einem verformbaren Kunststoff bestehen und über die mindestens eine erste Lamelle verformbar sein.

Die Ablenkelemente sind dann verformbar wodurch ein "Herausdrücken" aus dem Luftkanal durch eine verschwenkte erste Lamelle erreicht wird. Alternativ können die Ablenkelemente über mindestens eine Federeinrichtung verlagerbar sein. Die Ablenkelemente können bspw. starr ausgebildet und gegen die Kraft der Federeinrichtung aus dem Luftkanal herausdrückbar sein. Die Ablenkelemente sind in solchen Ausführungen verschwenkbar an einem Gehäuseabschnitt des Luftausströmers angeordnet. Alternativ dazu können die Ablenkelemente elastisch sein und über die mindestens eine erste Lamelle aus dem Luftkanal durch Verformung herausgedrückt werden.

Die verformbaren Ablenkelemente können als Schlepplamellen ausgebildet sein. Eine verformbare Ausgestaltung von Schlepplamellen ermöglicht es die Schlepplamellen bspw. in eine Ausnehmung zu drücken und dabei zu verformen. Die Ausbildung der Schlepplamellen ist derart zu wählen, dass sich diese leicht über die mindestens eine erste Lamelle verformen lassen aber zugleich so stabil sind, dass auch hohe Luftgeschwindigkeiten im Luftkanal nicht zu einer ungewünschten Verformung führen. Zusätzlich muss das Material für die Schlepplamellen so gewählt werden, dass es auch bei hohen Temperaturschwankungen in einem Bereich von bspw. -40 °C bis +60 °C einen Betrieb des Luftausströmers zulässt. Weiterhin soll das Material langlebig sein und auch nach längerer Einsatzzeit seine Elastizität behalten. Insbesondere wenn das Material für die Schlepplamellen hohen Temperaturschwankungen unterliegt.

Mindestens ein Ablenkelement kann entlang seiner Längsachse aus mindestens zwei Teillamellen bestehen. Eine Teillamelle bildet eine erste Luftleitfläche und eine zweite Teillamelle kann eine zweite Luftleitfläche bilden. Die beiden Teillamellen sind miteinander verbunden, wobei sich vorzugsweise eine erste Luftleitfläche in einer Ebene erstreckt. Die zweite Luftleitfläche kann gekrümmt ausgebildet sein.

Das Gehäuse des Luftausströmers und die Ablenkelemente können in weiteren Ausführungen einteilig ausgebildet sein, wobei die Ablenkelemente am Gehäuse durch dünne Stege angespritzt sind. Durch ein elastisches Verformen der Dünnstelle im Verbindungsbereich zwischen dem Gehäuse und den Ablenkelementen können diese aus dem Luftkanal herausschwenken.

In weiteren Ausführungsformen sind die Ablenkelemente verschwenkbar im Gehäuse gelagert, wobei die Ablenkelemente eine erste Luftleitfläche und eine zweite Luftleitfläche aufweisen, und die Ablenkelemente ragen in den Luftkanal und sind über die mindestens eine erste Lamelle verschwenkbar.

In weiteren Ausführungen kann die erste Luftleitfläche eine plane Fläche und die zweite Luftleitfläche eine gekrümmte Fläche aufweisen. Die Form des Gehäuses des Luftausströmer kann maßgeblich dafür sein, ob die Luftleitflächen plan oder gekrümmt ausgeführt sind. Wesentlich ist zudem die gewünschte Ablenkung über die der Luftaustrittsöffnung zugewandten Luftleitflächen der Ablenkelemente.

In weiteren Ausführungsformen sind die Ablenkelemente jeweils mit einer Federeinrichtung gekoppelt, wobei die Ablenkelemente gegen die Kraft der Federeinrichtung verschwenkbar sind. Das Verschwenken der Ablenkelemente erfolgt dabei gegen die Kraft der Federeinrichtung. Die Ablenkelemente können in derartigen Ausführungen als Schlepplamelle ausgebildet sein.

Die Schlepplamellen ragen in einer nicht verschwenkten Stellung der mindestens einen ersten Lamelle in den Luftkanal hinein. Die Schlepplamellen verengen somit den Luftkanal was zu einer erhöhten Austrittsgeschwindigkeit der ausgegebenen Luft führt. Zudem wird die ausströmende Luft über die beiden Schlepplamellen zu einem Spotstrahl gebündelt. Ist die mindestens eine erste Lamelle maximal verschwenkt worden, so drückt sie eine der Schlepplamellen im Wesentlichen vollständig aus dem Luftkanal heraus. In den Luftkanal einströmende Luft wird über die verschwenkte erste Lamelle abgelenkt. Die über die erste Lamelle herausgedrückte Schlepplamelle ragt dabei nicht mehr in den Luftkanal und hat keinen Einfluss auf die Luftablenkung. Die andere Schlepplamelle behält ihre ursprüngliche Position bei. Darüber hinaus können Zwischenstellungen erreicht werden, in welchen eine Schlepplamelle nur abschnittsweise aus dem Luftkanal herausgedrückt wird.

Die verschwenkte erste Lamelle und die nicht verschwenkte Schlepplamelle können bei einer maximalen Auslenkung der ersten Lamelle einen Kanal mit parallel gegenüberliegenden Wandabschnitten bilden. Ein Wandschnitt wird durch die erste Lamelle und der andere Wandabschnitt durch die nicht verschwenkte Schlepplamelle gebildet. Eine nicht verschwenkte erste Lamelle und eine nicht verschwenkte Schlepplamelle können in noch weiteren Ausführungen aber auch in einem Winkel zueinander geneigt sein.

Die Schwenkachsen der Schlepplamellen können entweder in einem vorderen Bereich des Luftkanals oder in einem hinteren Bereich des Luftkanals verlaufen. Im vorderen Bereich können die Schwenkachsen im Bereich der Luftaustrittsöffnung verlaufen. Die Schlepplamellen verengen in einer solchen Ausführung den Luftkanal in einem der Luftaustrittsöffnung abgewandten Bereich. Die Schlepplamellen verengen den Luftkanal im Bereich der Luftaustrittsöffnung, wenn die Schwenkachsen in einem hinteren Bereich des Luftkanals verlaufen.

In noch weiteren Ausführungsformen weist der Luftausströmer zwei erste Lamellen auf, die gemeinsam verschwenkbar sind, wobei die zwei ersten Lamellen jeweils hinter einem separaten Steg oder hinter einem gemeinsamen Steg verschwenkbar gelagert sind.

In weiteren Ausführungsformen können die hinter einem gemeinsamen Steg verschwenkbar gelagerten ersten Lamellen über ein Koppelelement an ihren dem Steg abgewandten Kanten miteinander gekoppelt sein.

In noch weiteren Ausführungsformen weisen die Ablenkelemente einen bogenförmigen Querschnitt auf. Eine bogenförmige Ausbildung ist strömungsgünstig und ermöglicht eine Luftablenkung ohne starke Verwirbelungen, wie sie beispielsweise bei geraden Ablenkeinrichtungen auftreten können.

In noch weiteren Ausführungsformen ist hinter der mindestens einen ersten Lamelle mindestens eine zweite Lamelle verschwenkbar im Luftkanal angeordnet, wobei die mindestens eine zweite Lamelle orthogonal zur mindestens einen ersten Lamelle verschwenkbar ist. Die mindestens eine zweite Lamelle dient zur Luftablenkung orthogonal zur Luftablenkung über die erste Lamelle. Bei einem Luftausströmer kann eine Vielzahl von zweiten Lamellen vorgesehen sein, die über einen Mitnehmer bzw. eine Koppelstange miteinander gekoppelt sind.

In noch weiteren Ausführungsformen sind im Bereich der Luftaustrittsöffnung starre Luftleitelemente angeordnet. Die Luftleitelemente können eine Luftablenkung unterstützen. Die Luftleitelemente müssen jedoch selbst nicht verschwenkbar sein. Luftleitelemente im Luftaustrittsbereich verbergen zusätzlich auch die beweglichen Komponenten des Luftausströmers und erlauben das äußere Erscheinungsbild verschiedenartig zu gestalten, wobei die Funktion der Luftablenkung weiterhin aufrecht erhalten und sogar unterstützt wird.

Die Luftaustrittsöffnung kann darüber hinaus in weiteren Ausführungsformen eine Fase aufweisen. Vorzugsweise weist die Luftaustrittsöffnung an den gegenüberliegenden Seiten eine Fase auf, welche parallel zu der mindestens einen ersten Lamelle verläuft. Die mindestens eine Fase ist so ausgerichtet und ausgebildet, dass diese eine Verlängerung einer ersten Luftleitfläche eines Ablenkelements, wie beispielsweise einer nicht verschwenkten Schlepplamelle bildet. Im verschwenkten Zustand der mindestens einen ersten Lamelle drückt diese bspw. eine Schlepplamelle aus dem Luftkanal heraus und die andere Schlepplamelle bildet zusammen mit der Fase einen parallel zu der verschwenkten ersten Lamelle verlaufenden Wandabschnitt. Ausströmende Luft wird über die Fase nicht abgelenkt, da die Fase die gleiche Ausrichtung aufweist wie die erste Luftleitfläche der nicht verschwenkten Schlepplamelle. Bei konventionellen Luftausströmern ohne eine solche Fase wird Luft über in den Strömungsweg ragende Kanten verwirbelt und abgelenkt.

In sämtlichen Ausführungsformen sind die als Schlepplamellen ausgebildeten Ablenkelemente so ausgebildet, dass diese zwei Luftleitflächen aufweisen, die in einem Winkel zueinander angeordnet sind. Vorzugsweise ist dabei die erste Luftleitfläche eben ausgebildet, so dass diese im Zusammenspiel mit einer Fase eine im Wesentlichen gerade Ablenkfläche bildet. Die zweite Luftleitfläche ist vorzugsweise gekrümmt ausgebildet. Dies hat den Vorteil, dass im nicht verschwenkten Zustand einer Schlepplamelle in den Luftkanal einströmende Luft entlang der Krümmung geleitet wird. Einströmende Luft kann dadurch in den Kanal zwischen der mindestens einen Lamelle und einer nicht verschwenkten Schlepplamelle geführt werden. Wenn beide Schlepplamellen nicht verschwenkt sind, wird einströmende Luft zu einem Luftstrahl gebündelt (Spotstellung).

Die Schlepplamellen sind verschwenkbar im Luftkanal angeordnet, wodurch eine definierte Verlagerung der Schlepplamellen über die erste Lamelle erreicht wird. Der Luftkanal weist ein Kanalgehäuse mit mindestens einer Öffnung auf. In diese Öffnung kann eine Schlepplamelle bewegt werden. Die Schlepplamelle ragt im vollständig verschwenkten Zustand soweit in die Öffnung hinein, dass die erste Luftleitfläche im Wesentlichen bündig mit einer Luftkanalwand abschließt. Damit die Schlepplamelle wieder aus der Öffnung herausgeschwenkt wird, wenn die erste Lamelle nicht mehr gegen die Schlepplamelle drückt, ist eine Federeinrichtung vorgesehen.

Mindestens eine Schlepplamelle kann einen bogenförmigen Querschnitt aufweisen. Bei einer Schlepplamelle mit einem bogenförmigen Querschnitt weist die zweite Luftleitfläche eine bogen- oder halbbogenförmige Krümmung auf. Die bogenförmige Krümmung weist im Hinblick auf die Luftablenkung eine strömungsgünstige Form auf.

Die Steuerung der mindestens einen ersten Lamelle, der mindestens einen zweiten Lamellen und/oder einer Schließklappe kann manuell oder motorisch, bspw. elektromotorisch, erfolgen. Bei einem motorischen Verstellen kann ein Stellelement auf eine erste Lamelle und eine zweite Lamelle wirken und somit ein Verschwenken derer bewirken.

In weiteren Ausführungen kann der Luftausströmer beleuchtbar sein. Hierzu können bspw. im Bereich von Luftleitelementen oder Stegen Leuchtmittel vorgesehen oder die Luftleitelemente oder Stege als Lichtleiter ausgebildet sein.

Weitere Vorteile, Merkmale und Ausgestaltungsmöglichkeiten ergeben sich aus den Figuren.

### Kurzbeschreibung der Figuren

In den Zeichnungen zeigt:
- Fig. 1: eine perspektivische Darstellung eines Luftausströmers einer ersten Ausführungsform;
- Fig. 2: eine schematische Schnittansicht durch den Luftausströmer der ersten Ausführungsform;
- Fig. 3: eine weitere schematische Schnittansicht des Luftausströmers der ersten Ausführungsform mit einer nach unten verschwenkten ersten Lamelle;
- Fig. 4: eine schematische Schnittansicht des Luftausströmers der ersten Ausführungsform in einer Neutralstellung;
- Fig. 5: eine schematische Frontansicht eines Luftausströmers einer zweiten Ausführungsform;
- Fig. 6: eine schematische Schnittansicht des Luftausströmers der zweiten Ausführungsform mit nach unten verschwenkten ersten Lamellen;
- Fig. 7: eine schematische Schnittansicht des Luftausströmers der zweiten Ausführungsform in einer Neutralstellung;
- Fig. 8: eine weitere schematische Schnittansicht eines Luftausströmers der zweiten Ausführungsform mit nach oben verschwenkten ersten Lamellen;
- Fig. 9: eine perspektivische Darstellung eines Luftausströmers einer dritten Ausführungsform;
- Fig. 10: eine schematische Frontansicht des Luftausströmers der dritten Ausführungsform;
- Fig. 11: eine schematische Schnittansicht des Luftausströmers der dritten Ausführungsform in einer Neutralstellung;
- Fig. 12: eine schematische Schnittansicht des Luftausströmers der dritten Ausführungsform mit einer nach unten verschwenkten ersten Lamelle;
- Fig. 13: eine perspektivische Darstellung eines Luftausströmers einer vierten Ausführungsform;
- Fig. 14: eine schematische Schnittansicht des Luftausströmers der vierten Ausführungsform in einer Neutralstellung;
- Fig. 15: eine schematische Schnittansicht des Luftausströmers der vierten Ausführungsform mit nach unten verschwenkten ersten Lamellen;
- Fig. 16: eine schematische Schnittansicht des Luftausströmers der vierten Ausführungsform mit nach oben verschwenkten ersten Lamellen;
- Fig. 17: eine perspektivische Darstellung eines Luftausströmers einer fünften Ausführungsform;
- Fig. 18: eine schematische Schnittansicht des Luftausströmers der fünften Ausführungsform in einer Neutralstellung;
- Fig. 19: eine schematische Schnittansicht des Luftausströmers der fünften Ausführungsform mit einer nach oben verschwenkten ersten Lamelle; und
- Fig. 20: eine schematische Schnittansicht des Luftausströmers der fünften Ausführungsform mit einer nach unten verschwenkten ersten Lamelle.

In den Zeichnungen mit gleichen Bezugszeichen versehene Teile entsprechen im Wesentlichen einander, sofern nichts anderes angegeben ist. Darüber hinaus wird darauf verzichtet, Bestandteile zu beschreiben und zu zeigen, welche nicht wesentlich zum Verständnis der hierin offenbarten technischen Lehre sind.

### Ausführliche Beschreibung von Ausführungsbeispielen

### Erste Ausführungsform

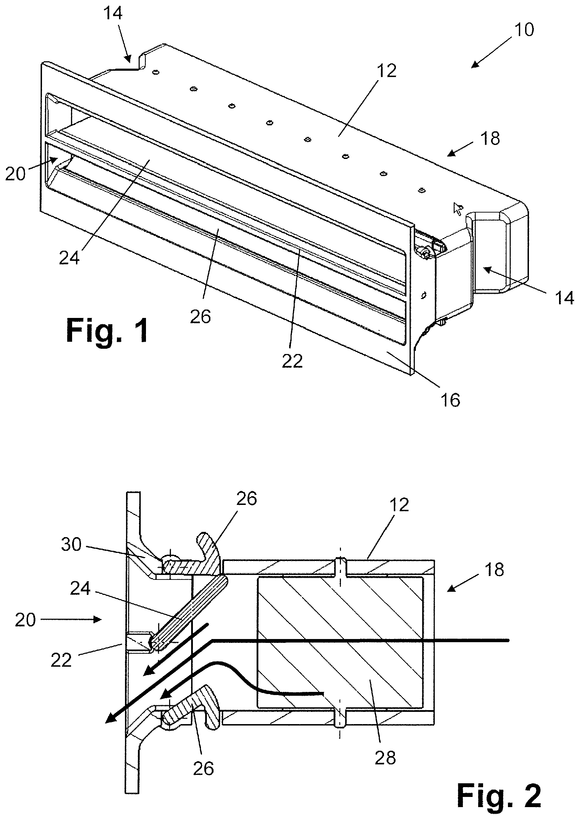

Fig. 1 zeigt eine perspektivische Darstellung eines Luftausströmers 10 einer ersten Ausführungsform. Der Luftausströmer 10 kann bspw. in einem Armaturenbrett eines Fahrzeugs eingebaut sein. Über den Luftausströmer 10 wird Luft in einen Fahrgastraum eines Fahrzeugs eingebracht, wobei die Richtung der ausströmenden Luft veränderbar ist. Zusätzlich kann auch die Menge der ausströmenden Luft veränderbar sein. Der Luftausströmer 10 ist als Fugenausströmer ausgebildet. Der Luftausströmer 10 weist deswegen eine deutlich größere Breite im Vergleich zu seiner Höhe auf.

Der Luftausströmer 10 weist ein Gehäuse 12 mit einer Lufteintrittsöffnung 18 und einer Luftaustrittsöffnung 20 auf. Über die Lufteintrittsöffnung 18 ist das Gehäuse 12 an einen Luftkanal angeschlossen, über den klimatisierte und temperierte Luft von einer Lüftungseinrichtung zugeführt wird. Über die Luftaustrittsöffnung 20 strömt die Luft aus dem Luftausströmer 10 aus. Zur Luftablenkung weist der Luftausströmer 10 eine erste Lamelle 24 und zweite Lamellen 28 sowie zwei als Schlepplamellen 26 ausgebildete Ablenkelemente auf.

Die zweiten Lamellen 28 dienen zur seitlichen Luftablenkung. Hierzu sind die zweiten Lamellen 28 über Lagerzapfen in den in Fig. 1 gezeigten Lageröffnungen verschwenkbar gelagert. Das Gehäuse 12 weist zusätzlich Verengungen 14 auf. An diesen Verengungen 14 kommen die zweiten Lamellen 28 in ihrer maximal verschwenkten Stellung in Anlage, welche sich direkt neben den Verengungen 14 befinden. In einer nicht verschwenkten Stellung der zweiten Lamellen 28 verengen diese Verengungen 14 den Luftkanal und bewirken eine Beschleunigung und Bündelung der durchströmenden Luft. Die Verengungen 14 können in einer Spotstellung die Luftausströmung unterstützen.

Im Bereich der Luftaustrittsöffnung 20 des Luftausströmers 10 ist eine Blende 16 angeordnet. Die Blende 16 kann entweder an dem Gehäuse 12 angeordnet oder als Teil des Gehäuses 12 zumindest mit Teilen des Gehäuses 12 einstückig hergestellt sein. Die Blende 16 kann bspw. mit dem Gehäuse 12 verklebt, verschraubt oder verrastet sein. Im Bereich der Luftaustrittsöffnung 20 weist die Blende 16 einen Steg 22 auf. Der Steg 22 erstreckt sich über die Breite der Luftaustrittsöffnung 20. Hinter dem Steg 22 ist an dessen dem Luftkanal zugewandten Abschnitt eine erste Lamelle 24 verschwenkbar gelagert. Im Bereich der Luftaustrittsöffnung 20 ist daher die vordere Kante der ersten Lamelle 24 nicht sichtbar.

Die erste Lamelle 24 kann sowohl an gegenüberliegenden Seitenwänden des Gehäuses 12 oder direkt an dem Steg 22 verschwenkbar gelagert sein.

Die Blende 16 weist parallel zu dem Steg 22 gegenüberliegende Abschnitte mit einer Fase 30 auf. Ferner ist im Gehäuse 12 parallel zu der ersten Lamelle 24 an den gegenüberliegenden Seiten des Luftkanals jeweils eine Schlepplamelle 26 verschwenkbar angeordnet. Die Schlepplamellen 26 ragen in den Luftkanal und sind hinter den Abschnitten der Blende 16 mit der Fase 30 angeordnet. Die Schlepplamellen 26 weisen eine erste Luftleitfläche 36 und eine zweite Luftleitfläche 38 auf, wobei die Ausrichtung der Schlepplamellen 26 im unbetätigten Zustand so ist, dass die ersten Luftleitflächen 36 mit den Abschnitten mit der Fase 30 eine Leitfläche für die ausströmende Luft bilden. Ausgestaltungen der Schlepplamellen 26 sind in den Fig. 2 bis 4 gezeigt und der nachfolgenden Beschreibung näher erläutert. Darüber hinaus ist die Funktionsweise der Schlepplamellen 26 in den Fig. 2 bis 4 gezeigt und wird nachfolgend beschrieben.

Fig. 2 zeigt eine schematische Schnittansicht durch einen Luftausströmer 10 einer ersten Ausführungsform. Fig. 2 zeigt den Luftausströmer 10 mit einer verschwenkten ersten Lamelle 24, die sich in ihrer maximal nach unten verschwenkten Stellung befindet. In dieser Stellung ist die obere Schlepplamelle 26 durch die erste Lamelle 24 aus dem Luftkanal heraus gedrückt worden. Die Hinterseite der Lamelle 24 ist zwar nach oben geschwenkt, die vordere, der Luftaustrittsöffnung 20 zugewandte Kante der Lamelle 24 und der Luftstrom schwenken allerdings nach unten. Aus diesem Grund wird daher in der Praxis von "nach unten geschwenkten Lamellen" gesprochen.

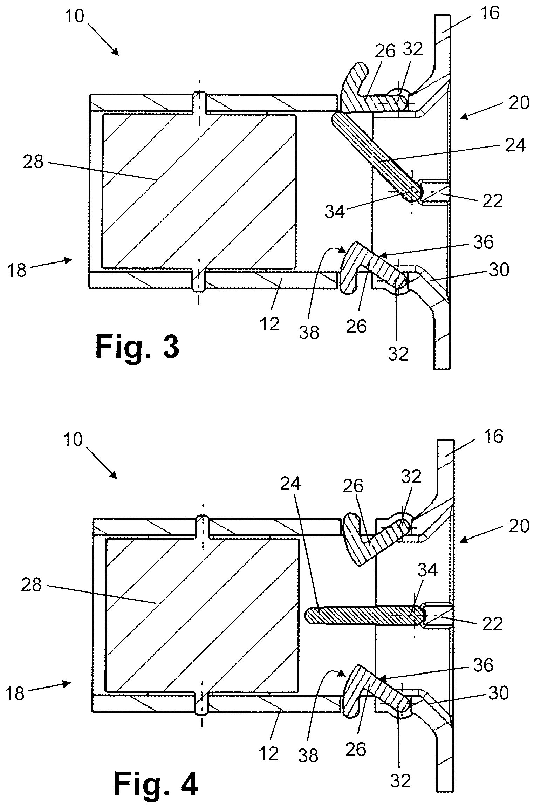

Die erste Lamelle 24 ist um eine Schwenkachse 34 (siehe bspw. Fig. 3) verschwenkbar gelagert. Die Schlepplamellen 26 sind um Schwenkachsen 32 (siehe bspw. Fig. 3) am Gehäuse 12 des Luftausströmers 10 gelagert. Die Schlepplamellen 26 werden über eine in den Figuren nicht dargestellte Federeinrichtung in den Luftkanal gedrückt. Alternativ zu einer Federeinrichtung kann das "Hineindrücken" auch mittels Magnetkraft erfolgen, wozu entsprechende Einrichtungen vorgesehen sind.

Die Federeinrichtungen für die jeweiligen Schlepplamellen 26 können verschiedenartig ausgeführt sein. Bspw. kann eine als Druckfeder ausgebildete Federeinrichtung vorgesehen sein und eine Schlepplamelle 26 in den Luftkanal drücken. Weiterhin kann auch eine als Schrauben-/Schenkelfeder ausgebildete Federeinrichtung vorgesehen sein und auf eine Schlepplamelle 26 über deren Lagerzapfen auf diese wirken. In weiteren Ausführungen kann auch eine Zugfeder vorgesehen sein, die beide Schlepplamellen 26 miteinander verbindet, so dass nur eine Feder je Luftausströmer 10 benötigt wird.

Fig. 3 zeigt eine weitere schematische Ansicht des Luftausströmers 10 der ersten Ausführungsform mit einer verschwenkten ersten Lamelle 24. Im nach unten verschwenkten Zustand der ersten Lamelle 24 drückt diese die obere Schlepplamelle 26 gegen die Kraft einer Federeinrichtung aus dem Luftkanal heraus. Die hintere Kante der ersten Lamelle 24 liegt an der oberen Wand des Luftkanals an. Die untere Schlepplamelle 26 befindet sich in ihrer Ausgangsstellung und wird über die Federeinrichtung in den Luftkanal gedrückt. Zwischen der ersten Lamelle 24 und der unteren Schlepplamelle 26 wird dadurch ein Luftkanal mit im Wesentlichen parallelen Kanalwänden gebildet. Der untere Abschnitt mit der Fase 30 wirkt als Verlängerung der ersten Luftleitfläche 36 der unteren Schlepplamelle 26.

Einströmende Luft wird von der ersten Lamelle 24 und der zweiten Luftleitfläche 38 der unteren Schlepplamelle 26 abgelenkt. Die zweite Luftleitfläche 38 ist gekrümmt ausgebildet, so dass die einströmende Luft über die zweite Luftleitfläche 38 geführt wird (siehe Fig. 2). Die Schlepplamellen 26 ermöglichen es auch bei einer relativ geringen Höhe der Luftaustrittsöffnung 20 eine Luftablenkung nach oben und unten zu erreichen, die eine Luftablenkung bei herkömmlichen Fugenausströmern übertrifft. Bspw. kann ausgehend von einer Spotstellung mit einem im Wesentlichen waagrecht austretenden Luftstrahl eine Luftablenkung um 45° erfolgen.

Zur schwenkbeweglichen Lagerung der Schlepplamellen 26 weisen die Schlepplamellen 26 Lagerzapfen auf, die in entsprechenden Lageröffnungen im Gehäuse 12 gelagert sind. Das Gehäuse 12 weist zudem Öffnungen auf, in welche die Schlepplamellen 26 beim Verschwenken hineingedrückt werden.

Fig. 4 zeigt eine schematische Ansicht des Luftausströmers 10 der ersten Ausführungsform in einer Neutralstellung. Einströmende Luft wird über die Schlepplamellen 26 zu der ersten Lamelle 24 hin geleitet und strömt im Wesentlichen parallel zu der ersten Lamelle 24 aus dem Luftaustrittsabschnitt 20. Über die Querschnittsänderung des Luftkanals durch die Schlepplamellen 26 wird auch eine Beschleunigung des austretenden Luftstroms erreicht.

Die zweiten Lamellen 28 sind in den Fig. 1 bis 4 nicht verschwenkt. Eine Luftablenkung zur Seite erfolgt daher nicht. Das Verschwenken der ersten Lamelle 24 und der zweiten Lamellen 28 kann motorisch oder manuell erfolgen. Beispielsweise kann hierzu neben der Blende 16 ein Bedienelement, wie bspw. ein Joystick und/oder ein Bedienrad, vorgesehen sein. Es kann auch ein Bedienelement im Bereich der ersten Lamelle 24 vorgesehen sein. Das Bedienelement kann den Steg 22 umgreifen oder durchdringen und in Längsrichtung auf der ersten Lamelle 24 verschiebbar gelagert sein. Wird ein Druck auf das Bedienelement ausgeübt, führt dies zu einem Verschwenken der ersten Lamelle 24. Wird das Bedienelement in Längsrichtung verschoben, können die zweiten Lamellen 28 verschwenkt werden. Hierzu weist das Bedienelement einen Mitnehmer auf, der mit mindestens einer zweiten Lamelle 28 gekoppelt ist. Die zweiten Lamellen 28 sind über eine Koppelstange miteinander verbunden, so dass ein Verschwenken einer zweiten Lamelle 28 automatisch ein Verschwenken der anderen zweiten Lamellen 28 bewirkt.

Bei einer motorischen Ansteuerung der ersten Lamelle 24 und der zweiten Lamellen 28 kann eine Übertragung auf die Lagerzapfen erfolgen und damit ein Verschwenken erreicht werden. In weiteren Ausführungen kann ein Verschwenken auch anderweitig über mindestens einen Elektromotor erreicht werden. Auch kann über Aktuatoren ein Verschwenken der ersten Lamelle 24 und/oder der zweiten Lamellen 28 erreicht werden. Zusätzlich kann im Luftkanal im Bereich der Lufteintrittsöffnung 18 oder einer dahinter gelegenen Stelle eine Schließklappe oder eine andere Absperrvorrichtung vorgesehen sein, über welche die Menge an zugeführter Luft regelbar ist. Hierzu können manuelle und/oder motorische Bedienelemente vorgesehen sein.

### Zweite Ausführungsform

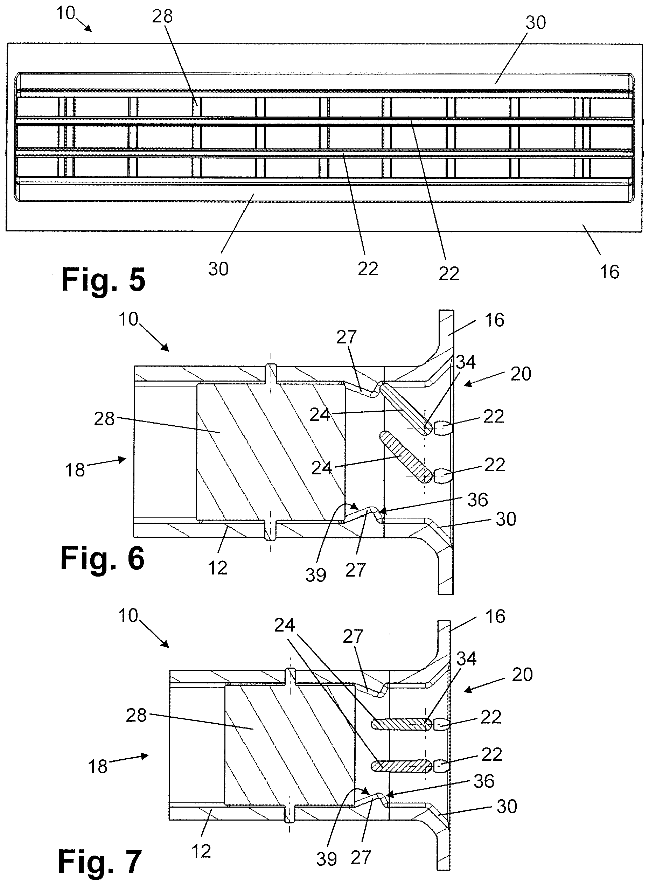

Fig. 5 zeigt eine schematische Frontansicht eines Luftausströmers 10 einer zweiten Ausführungsform. Der Luftausströmer 10 der zweiten Ausführungsform unterscheidet sich von dem Luftausströmer 10 der ersten Ausführungsform dadurch, dass dieser zwei Stege 22 und zwei erste Lamellen 24 aufweist. Darüber hinaus weist der Luftausströmer 10 anstelle zweier Schlepplamellen 26 zwei als Rampen 27 gegenüberliegende Ablenkelemente auf. Die Rampen 27 sind starr ausgebildet und können nicht verschwenkt und nicht verformt werden. Der Luftausströmer 10 ist als Fugenausströmer ausgebildet und weist daher im Vergleich zu seiner Breite eine relativ geringe Höhe auf.

Fig. 6 zeigt eine schematische Ansicht des Luftausströmers 10 der zweiten Ausführungsform mit nach unten verschwenkten ersten Lamellen 24. Die ersten Lamellen 24 befinden sich bei der in Fig. 6 gezeigten Stellung in ihrer maximal verschwenkten Stellung, so dass die obere erste Lamelle 24 an einem Übergang zwischen der ersten Luftleitfläche 36 der Rampe 27 und der Kanalwand des Luftkanals anliegt. Über die obere Rampe 27 erfolgt eine "Vorablenkung" der Luft, so dass die auf die Leitfläche der oberen ersten Lamelle 24 auftreffende Luft bereits eine Ablenkung erfahren hat. Dadurch wird verhindert, dass der auftreffende Luftstrahl frontal auf die Leitfläche der ersten Lamelle 24 trifft. Ein frontales Auftreffen kann zu unerwünschten Verwirbelung der Luft und zu Störgeräuschen führen.

In der in Fig. 6 dargestellten Stellung erfolgt eine Luftablenkung nach unten. Die Luftablenkung erfolgt analog zu der Luftablenkung der ersten Ausführungsform, wobei einströmende Luft durch die Rampen 27 zu den ersten Lamellen 24 geleitet wird. Einströmende Luft wird bei sämtlichen Stellungen der ersten Lamellen 24 über die zweiten Luftleitflächen 38 zu den ersten Lamellen 24 geleitet. Durch die Engstelle zwischen den Rampen 27 wird eine Beschleunigung des durchströmenden Luftstroms erreicht.

Fig. 7 zeigt eine schematische Ansicht des Luftausströmers 10 der zweiten Ausführungsform in einer Neutralstellung mit nicht verschwenkten ersten Lamellen 24. In einer solchen Stellung wird die einströmende Luft über die Rampen 27 zu den ersten Lamellen 24 geleitet. Von dort aus wird die Luft über die Leitflächen der ersten Lamellen 24 als Spotstrahl geradlinig ausgegeben. Durch die Engstelle zwischen den Rampen 27 wird eine Erhöhung der Geschwindigkeit des durchströmenden Luftstroms erreicht. Dies unterstützt die Luftablenkung.

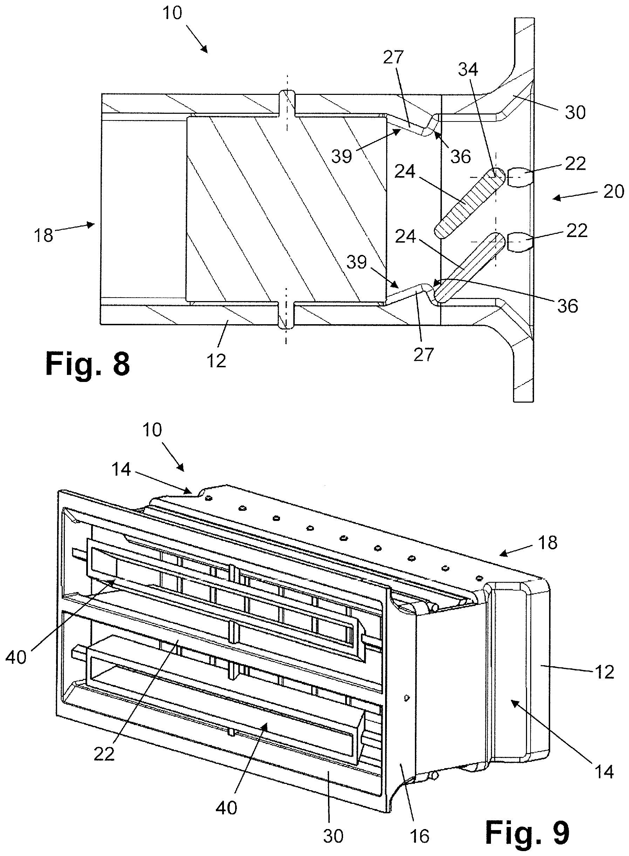

Fig. 8 zeigt eine weitere schematische Ansicht eines Luftausströmers 10 der zweiten Ausführungsform mit nach unten verschwenkten ersten Lamellen 24. In dieser Stellung der ersten Lamellen 24 liegt die untere Lamelle 24 an einem Übergang zwischen der Luftleitfläche 36 der unteren Rampe 27 und der Kanalwand des Luftkanals an.

Die Ausbildung von gegenüberliegenden Abschnitten mit einer Fase 30 unterstützt die Luftablenkung. Die obere erste Lamelle 26 bildet beim Verschwenken der ersten Lamellen 24 zusammen mit der oberen Fase 30 einen Luftkanal aus, wobei der obere Abschnitt mit der Fase 30 eine Verlängerung der Luftleitfläche der ersten Lamelle 24 bildet. Ein zweiter Luftkanal wird zwischen den beiden ersten Lamellen 24 gebildet (siehe Fig. 8).

### Dritte Ausführungsform

Fig. 9 zeigt eine perspektivische Darstellung eines Luftausströmers 10 einer dritten Ausführungsform. Der Luftausströmer 10 der dritten Ausführungsform unterscheidet sich von dem Luftausströmer 10 der ersten Ausführungsform dadurch, dass zusätzlich Luftleitelemente 40 im Bereich der Luftaustrittsöffnung 20 angeordnet sind.

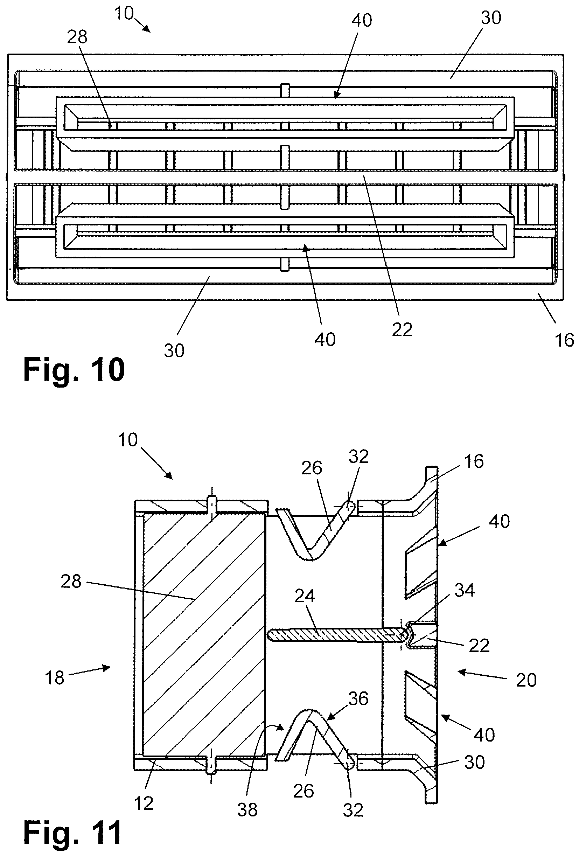

Fig. 10 zeigt den Luftausströmer 10 der dritten Ausführungsform in einer schematischen Frontansicht. Die Luftleitelemente 40 erstrecken sich parallel zu dem Steg 22 und weisen eine rahmenförmige Ausgestaltung auf. Die Luftleitelemente 40 sind starr ausgebildet und können nicht verschwenkt werden.

Fig. 11 zeigt eine schematische Ansicht des Luftausströmers 10 der dritten Ausführungsform in einer Neutralstellung im Schnitt. Die Luftleitelemente 40 sind so ausgebildet, dass diese eine Luftablenkung unterstützen. Das obere Luftleitelement 40 ist derart ausgebildet und ausgerichtet, dass bei einer Luftablenkung nach oben die Ablenkung unterstützt wird. Analog dazu ist das untere Luftleitelement 40 so ausgebildet, dass eine Luftablenkung nach unten unterstützt wird.

Bei einer Neutralstellung (Spotstellung) wird eine Luftablenkung über die Luftleitelemente 40 über die Schlepplamellen 26 reduziert, da die Luft über die zweiten Luftleitflächen 38 in die Mitte des Luftkanals zu der ersten Lamelle 24 gelenkt wird. Dementsprechend gelangt nur einer kleinerer Luftstrom zu den Luftleitelementen 40.

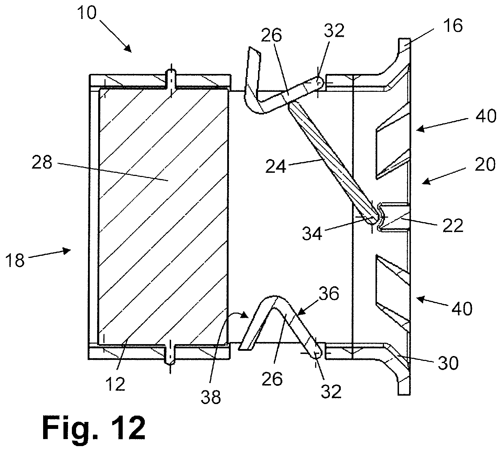

Fig. 12 zeigt eine schematische Ansicht des Luftausströmers 10 der dritten Ausführungsform mit einer nach oben verschwenkten ersten Lamelle 24. Die Darstellung zeigt, dass die Luftleitelemente 40 so ausgebildet sind, dass eine Unterstützung der Luftablenkung erfolgt. Bei Fig. 12 weisen die Leitflächen des unteren Luftleitelements 40 im Wesentlichen die gleiche Ausrichtung auf, wie die untere Fase 30 und die verschwenkte erste Lamelle 24.

Darüber hinaus unterscheiden sich die Schlepplamellen 26 der ersten Ausführungsform und der dritten Ausführungsform in ihrer Ausbildung. Die Schlepplamellen 26 der dritten Ausführungsform weisen zwei im Wesentlichen geradlinige Luftleitflächen 36 und 38 auf. Da über die Luftleitelemente 40 eine weitere Unterstützung der Luftablenkung erfolgt, müssen insbesondere die Luftleitflächen 38 keine Ablenkung bereitstellen wie in Ausführungen ohne Luftleitelemente 40. Die Luftablenkung über die Luftleitflächen 38 in der dritten Ausführungsform kann daher weniger gerichtet erfolgen. Zudem weisen die Schlepplamellen 26 der dritten Ausführungsform einen größeren Abstand zueinander auf, so dass eine härtere, d.h. stärkere Ablenkung der Luft erfolgen muss.

### Vierte Ausführungsform

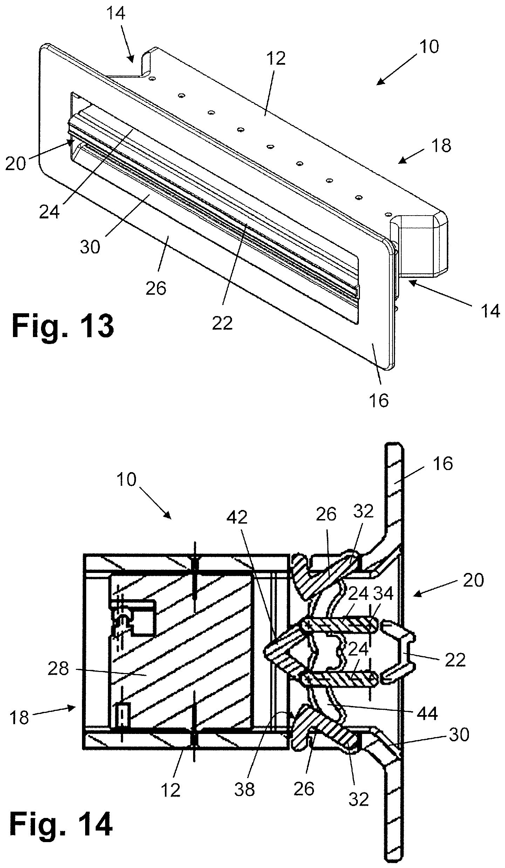

Fig. 13 zeigt eine perspektivische Darstellung eines Luftausströmers 10 einer vierten Ausführungsform. Der Luftausströmer 10 der vierten Ausführungsform unterscheidet sich von dem Luftausströmer 10 der ersten Ausführungsform dadurch, dass zwei erste Lamellen 24 vorgesehen sind, die in Luftströmungsrichtung einem gemeinsamen Steg 22 vorgelagert sind. Der gemeinsame Steg 22 überdeckt die beiden vorderen Stirnseiten der ersten Lamellen 24. An Ihrer Rückseite sind die ersten Lamellen 24 über ein Koppelelement 42 miteinander verbunden. Das Koppelelement 42 kann entweder als bekanntes Koppelelement ausgebildet sein und eine Kopplung der beiden ersten Lamellen 24 bereitstellen oder sich im Wesentlichen über die gesamte Breite der ersten beiden Lamellen 24 erstrecken und an deren hinteren Stirnseiten verschwenkbar mit diesen gekoppelt sein.

In der vierten Ausführungsform erstreckt sich das Koppelelement 42 im Wesentlichen über die gesamte Breite der ersten Lamellen 24 und stellt damit eine Luftzufuhr in einen oberen und einen unteren Bereich bereit. Hierzu weist das Koppelelement 42 zwei winklig zueinander angeordnete Ablenkflächen auf, die einströmende Luft zu den entsprechenden Bereichen führen. Die Ablenkflächen sind aerodynamisch ausgebildet und können in weiteren, nicht dargestellten Ausführungen auch andere aerodynamische Ausgestaltungen aufweisen (Gewehrkugel, Tragfläche, etc.).

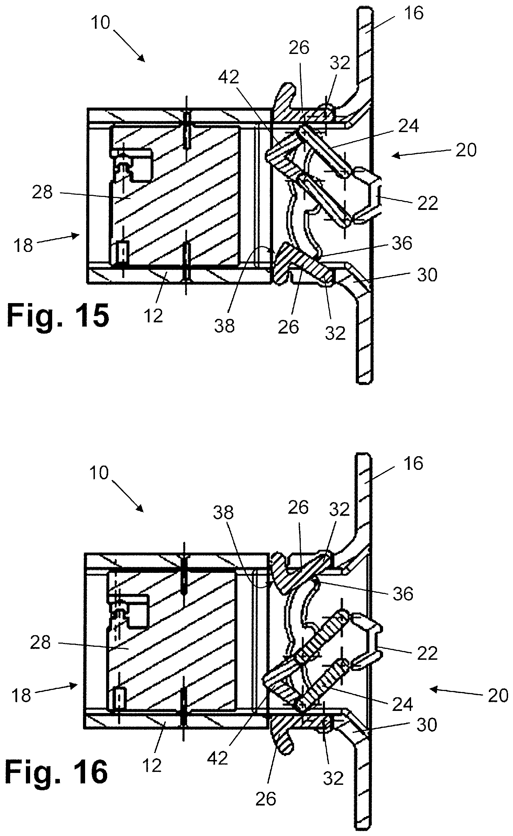

Zusätzlich weist der Luftausströmer 10 der vierten Ausführungsform eine Kulisse 44 in mindestens einer Seitenwand auf. In diese Kulisse 44 greifen Stifte, die an den Seitenflächen der ersten Lamellen 24 angeordnet sind. Die Kulisse 44 ist so ausgebildet, dass die ersten Lamellen 24 einer definierten Bahn beim Verschwenken folgen. Zusätzlich stellt die Kulisse 44 sicher, dass das Koppelelement 42 in den verschwenkten Stellungen der ersten Lamellen 24 seine Ausrichtung beibehält (siehe hierzu Fig. 15 und 16).

Die Ablenkelemente sind ebenfalls als Schlepplamellen 26 ausgebildet. Diesbezüglich wird auf die Funktion und Ausgestaltung der ersten Ausführungsform verwiesen.

Fig. 14 zeigt eine schematische Schnittansicht des Luftausströmers 10 der vierten Ausführungsform in einer Neutralstellung. Einströmende Luft wird über die Ablenkflächen des Koppelelements 42 in einen oberen und einen unteren Bereich geführt. Der obere Bereich und der untere Bereich sind als extreme Engstellen ausgeführt, da die Schlepplamellen 26 in den Luftkanal hineinragen. Ausströmende Luft wird daher beschleunigt. Hierdurch ergibt sich ein definierter Spotstrahl. Zusätzlich kann eine Aufteilung des auftretenden Luftstroms dadurch erreicht werden, dass der gemeinsame Steg 22 schräge Bereiche mit einer Fase aufweist. Analog zu den Fasen 30 kann ausströmende Luft hierüber entlang geführt werden.

Fig. 15 zeigt eine schematische Schnittansicht des Luftausströmers 10 der vierten Ausführungsform mit nach unten verschwenkten ersten Lamellen 24. Die obere erste Lamelle 24 drückt dabei die obere Schlepplamelle 26 in eine Öffnung des Gehäuses 12 hinein. Dabei wird ein Luftkanal zwischen der Luftleitfläche 36 und der ersten unteren Lamelle 24 gebildet, der eine Luftablenkung nach unten ermöglicht. Die Ausbildung des Koppelelements 42 unterstützt dabei die Luftablenkung. In einer maximal verschwenkten Stellung (siehe Fig. 15) dient eine erste Leitfläche des Koppelelements 42 im Wesentlichen als Verlängerung der Leitfläche der unteren ersten Lamelle 24. Bei nach oben verschwenkten ersten Lamellen 24 erfolgt in analoger Weise eine Luftzufuhr nach oben, wobei zwischen der ersten Luftleitfläche 36 der oberen Schlepplamelle 26 und den gegenüberliegenden Leitflächen des Koppelelementes 42 und der oberen ersten Lamelle 24 ein weiterer Luftkanal gebildet wird, der die Luft nach oben ablenkt.

Das Koppelelement 42 unterstützt die Luftablenkung, sodass bei einem geringeren Bauraum im Vergleich zu aus dem Stand der Technik bekannten Luftausströmern eine deutlich größere Luftablenkung erreicht werden kann.

Die Schlepplamellen 26 sind ebenfalls wie bereits vorstehend beschrieben über eine Federeinrichtung vorgespannt und werden über diese in den Luftkanal gedrückt. Über die ersten Lamellen 24 können die Schlepplamellen 26 aus dem Luftkanal herausbewegt werden.

Bei der vierten Ausführungsform erfolgt in sämtlichen Stellungen der ersten Lamellen 24 eine Verengung des Luftkanals, was die Luftablenkung zusätzlich unterstützt. Je stärker die austretende Luftgeschwindigkeit ist, desto stärker ist die Luftablenkung.

Fig. 16 zeigt schließlich eine schematische Schnittansicht des Luftausströmers 10 der vierten Ausführungsform mit nach oben verschwenkten ersten Lamellen 24. Dabei wird die untere Schlepplamelle 26 vollständig nach unten aus dem Luftkanal herausgedrückt und die obere Leitfläche des Koppelelements 42 bildet eine Verlängerung der Luftleitfläche der oberen ersten Lamelle 24.

### Fünfte Ausführungsform

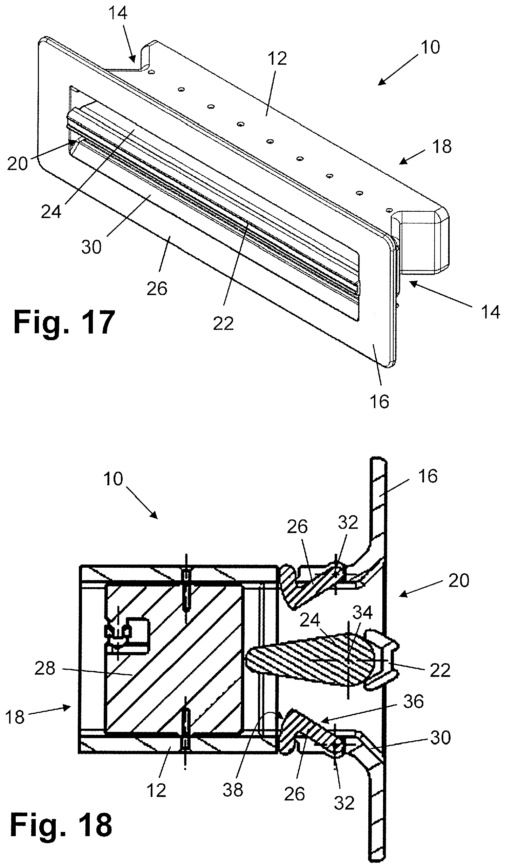

Fig. 17 zeigt eine perspektivische Darstellung eines Luftausströmers 10 einer fünften Ausführungsform. Der Luftausströmer 10 der fünften Ausführungsform unterscheidet sich von dem Luftausströmer der ersten Ausführungsform dadurch, dass die erste Lamelle 24 größer dimensioniert ist. Die erste Lamelle 24 weist einen aerodynamisch günstigen Querschnitt auf. Der Querschnitt der ersten Lamelle 24 ist im fünften Ausführungsbeispiel ähnlich zu einer Tragfläche ausgebildet. Der Querschnitt kann auch im Wesentlichen keulenförmig ausgebildet sein oder im Ausführungsbeispiel als solcher bezeichnet werden. Ein weiterer Unterschied zur ersten Ausführungsform besteht darin, dass ein breiterer Steg 22 angeordnet ist, der die vordere keulenförmige Stirnfläche der ersten Lamelle 24 überdeckt. Die keulenförmige Ausgestaltung der ersten Lamelle 24 stellt in Kombination mit den Schlepplamellen 26 zum einen bereit, dass der Luftkanal eine Verengung aufweist, was zu einer Beschleunigung der ausströmenden Luft führt, und bietet zudem den Vorteil einer Ablenkung der Luft, vor allem in den verschwenkten Stellungen der ersten Lamelle 24.

Fig. 18 zeigt eine schematische Schnittansicht des Luftausströmers 10 der fünften Ausführungsform in einer Neutralstellung. In der Neutralstellung strömt die Luft entlang der Oberfläche der ersten Lamelle 24 und erfährt im Wesentlichen keine Ablenkung, da eine Bündelung der ausströmenden Luft sowohl in dem oberen Bereich zwischen der Schlepplamelle 26 und der Oberfläche der ersten Lamelle 24 als auch im unteren Bereich zwischen der Oberfläche der ersten Lamelle 24 und der gegenüberliegenden Schlepplamelle 26 erreicht wird. Die gebündelte Luft strömt dabei anschließend im Wesentlichen unverändert geradlinig aus.

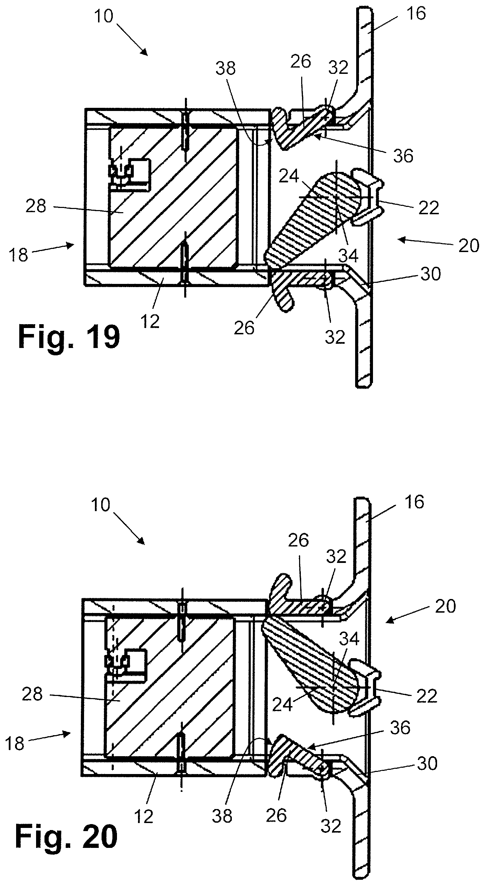

Fig. 19 zeigt eine schematische Schnittansicht des Luftausströmers der fünften Ausführungsform mit einer nach oben verschwenkten ersten Lamelle 24. Die erste Lamelle 24 drückt dabei die untere Schlepplamelle 26 aus dem Luftkanal heraus. Einströmende Luft wird durch die keulenförmige Ausgestaltung des Querschnitts der ersten Lamelle 24 deutlich stärker nach oben abgelenkt als bei einer ersten Lamelle 24 mit einem im Wesentlichen homogenen Querschnitt (siehe hierzu beispielsweise Fig. 2). Die keulenförmige Ausgestaltung unterstützt vorteilhaft die Luftablenkung, wobei eine größere Luftablenkung erreicht werden kann, als dies bei ähnlichen Luftausströmern aus dem Stand der Technik bisher möglich war. Die keulenförmige Ausgestaltung des Querschnitts der ersten Lamelle 24 bietet die Möglichkeit, dass eine sehr starke Luftablenkung über einen sehr kurzen Wegabschnitt innerhalb des Luftkanals erreicht wird. Bei konventionellen Luftausströmern wäre der Weg, über welchen die Luftablenkung erreicht wird deutlich größer als bei der fünften Ausführungsform, d.h. dass beispielsweise die Lamellen oder Lamellenteile zur Luftablenkung viel weiter in den Luftkanal bei konventionellen Luftausströmern hinein ragen würden.

Fig. 20 zeigt schließlich eine schematische Schnittansicht des Luftausströmers 10 der fünften Ausführungsform mit einer nach unten verschwenkten ersten Lamelle 24.

Der Luftausströmer 10 der fünften Ausführungsform ermöglicht ebenfalls wie die bereits vorstehenden beschriebenen Ausführungsformen eine Luftablenkung über einen weiten Bereich, wobei der hierfür erforderliche Raum gegenüber bekannten Ausführungen deutlich geringer ist. Zudem werden über den mindestens einen Steg 22 Luftausströmer 10 bereitgestellt, die ein optisch ansprechendes Erscheinungsbild aufweisen und ein Eindringen von Gegenständen oder Körperteilen verhindern. Dies dient sowohl dem Schutz von Personen als auch einer Beschädigung des Luftausströmers 10 vorzubeugen, da keine Gegenstände eingeführt werden können oder das Einführen erschwert ist.

### Bezugszeichenliste

| | |
|---|---|
| 10 | Luftausströmer |
| 12 | Gehäuse |
| 14 | Verengung |
| 16 | Blende |
| 18 | Lufteintrittsöffnung |
| 20 | Luftaustrittsöffnung |
| 22 | Steg |
| 24 | erste Lamelle |
| 26 | Schlepplamelle |
| 27 | Rampe |
| 28 | zweite Lamelle |
| 30 | Fase |
| 32 | Schwenkachse |
| 34 | Schwenkachse |
| 36 | erste Luftleitfläche |
| 38 | zweite Luftleitfläche |
| 39 | Luftleitfläche |
| 40 | Luftleitelement |
| 42 | Koppelelement |
| 44 | Kulisse |

## Patentansprüche

1. Luftausströmer, aufweisend einen Luftkanal, in dem mindestens eine erste Lamelle (24) verschwenkbar angeordnet ist, mit einer Luftaustrittsöffnung (20), wobei
- parallel zu der mindestens einen ersten Lamelle (24) an den gegenüberliegenden Seiten des Luftkanals jeweils mindestens ein Ablenkelement angeordnet ist, **dadurch gekennzeichnet, dass**:
- im Bereich der Luftaustrittsöffnung (20) mindestens ein Steg (22) angeordnet ist, der parallel zu der mindestens einen ersten Lamelle (24) verläuft,
- die mindestens eine erste Lamelle (24) im Bereich des mindestens einen Stegs (22) verschwenkbar gelagert ist,
- die Ablenkelemente in den Luftkanal ragen und nicht miteinander gekoppelt sind¹, und
- die Ablenkelemente
a) starr ausgebildete Rampen (27)²,
b) durch die mindestens eine erste Lamelle (24) verformbar³, oder
c) durch die mindestens eine erste Lamelle (24) verschwenkbar gelagerte Schlepplamellen (26) sind, die eine erste Luftleitfläche und eine zweite Luftleitfläche aufweisen⁴.

2. Luftausströmer nach Anspruch 1, wobei die erste Luftleitfläche eine plane Fläche und die zweite Luftleitfläche eine gekrümmte Fläche aufweisen.

3. Luftausströmer nach Anspruch 1 oder 2, wobei die Ablenkelemente jeweils mit einer Federeinrichtung gekoppelt sind und die Ablenkelemente gegen die Kraft der Federeinrichtung verschwenkbar sind.

4. Luftausströmer nach einem der Ansprüche 1 bis 3, aufweisend zwei erste Lamellen (24) die gemeinsam verschwenkbar sind, wobei die zwei ersten Lamellen (24) jeweils hinter einem separaten Steg (22) oder hinter einem gemeinsamen Steg (22) verschwenkbar gelagert sind.

5. Luftausströmer nach Anspruch 4, wobei die hinter einem gemeinsamen Steg (22) verschwenkbar gelagerten ersten Lamellen (24) über ein Koppelelement (42) an ihren dem Steg (22) abgewandten Kanten miteinander gekoppelt sind.

6. Luftausströmer nach einem der Ansprüche 1 bis 5, wobei die Ablenkelemente einen bogenförmigen Querschnitt aufweisen.

7. Luftausströmer nach einem der Ansprüche 1 bis 6, wobei hinter der mindestens einen ersten Lamelle (24) mindestens eine zweite Lamelle (28) verschwenkbar im Luftkanal angeordnet ist und die mindestens eine zweite Lamelle (28) orthogonal zur mindestens einen ersten Lamelle (24) verschwenkbar ist.

8. Luftausströmer nach einem der Ansprüche 1 bis 7, wobei im Bereich der Luftaustrittsöffnung (20) starre Luftleitelemente (40) angeordnet sind.

## Claims

1. Air vent comprising an air channel one which at least one first slat (24) is arranged to be pivotable, with an air outlet opening (20), wherein
- at least one respective deflecting element is arranged parallel to the at least one first slat (24) at the opposite sides of the air channel,
**characterised in that**
- at least one web (22) extending parallel to the at least one first slat (24) is arranged in the region of the air outlet opening (20),
- the at least one first slat (24) is pivotably mounted in the region of the at least one web (22),
- the deflecting elements project into the air channel and are not coupled with one another and
- the deflecting elements
a) are rigidly constructed ramps (27)
b) deformable by the at least one first slat (24),
c) or are drag flaps (26) mounted to be pivotable by the at least one first slat (24),
which have a first guide surface and a second guide surface.

2. Air vent according to claim 1, wherein the first air guide surface has a planar area and the second air guide surface has a curved area.

3. Air vent according to claim 1 or 2, wherein the deflecting elements are each coupled with a spring device and the deflecting elements are pivotable against the force of the spring device.

4. Air vent according to any one of claims 1 to 3, comprising two first slats (24) which are pivotable in common, wherein the two first slats (24) are respectively pivotably mounted behind a separate web (22) or behind a common web (22).

5. Air vent according to claim 4, wherein the first slats (24) pivotably mounted behind a common web (22) are coupled together by way of a coupling element (42) at their edges remote from the web (22).

6. Air vent according to any one of claims 1 to 5, wherein the deflecting elements have a curved cross-section.

7. Air vent according to any one of claims 1 to 6, wherein at least one second slat (28) is pivotably arranged behind the at least one first slat (24) and in the air channel and the at least one second flat (28) is pivotable orthogonally to the at least one first slat (24).

8. Air vent according to any one of claims 1 to 7, wherein rigid air guide elements (40) are arranged in the region of the air outlet opening (20).

## Revendications

1. Diffuseur d'air, comportant une gaine d'air, dans lequel au moins une première lamelle (24) est disposée de façon pivotante, avec une ouverture de sortie d'air (20),
- respectivement au moins un déflecteur étant disposé parallèlement à la au moins une première lamelle (24) sur les côtés opposés de la gaine d'air, **caractérisé en ce que** :
- au moins une barrette (22) est disposée dans la zone de l'ouverture de sortie d'air (20) et est parallèle à la au moins une première lamelle (24),
- la au moins une première lamelle (24) est supportée de façon pivotante dans la zone de la au moins une barrette (22),
- les déflecteurs dépassent dans la gaine d'air et ne sont pas couplés les uns aux autres, et
- les déflecteurs
a) sont des rampes (27) constituées de façon rigide,
b) peuvent être déformés par la au moins une première lamelle (24), ou
c) sont des lamelles entraînées (26) supportées de façon pivotante par la au moins une première lamelle (24) qui comportent une première surface de guidage d'air et une deuxième surface de guidage d'air.

2. Diffuseur d'air selon la revendication 1, la première surface de guidage d'air comportant une surface plane, et la deuxième surface de guidage d'air comportant une surface courbée.

3. Diffuseur d'air selon la revendication 1 ou 2, les déflecteurs étant respectivement couplés à un dispositif à ressort, et les déflecteurs pouvant pivoter contre la force du dispositif à ressort.

4. Diffuseur d'air selon l'une des revendications 1 à 3, comportant deux premières lamelles (24) qui peuvent pivoter conjointement, les deux premières lamelles (24) étant supportées de façon pivotante respectivement derrière une barrette (22) séparée ou derrière une barrette (22) commune.

5. Diffuseur d'air selon la revendication 4, les premières lamelles (24) supportées de façon pivotante derrière une barrette (22) commune étant couplées entre elles par le biais d'un élément d'accouplement (42) au niveau de leurs arêtes éloignées de la barrette (22).

6. Diffuseur d'air selon l'une des revendications 1 à 5, dans lequel les déflecteurs présente une section transversale en forme d'arc.

7. Diffuseur d'air selon l'une des revendications 1 à 6, au moins une deuxième lamelle (28) étant disposée de façon pivotante dans la gaine d'air derrière la au moins une première lamelle (24), et la au moins une deuxième lamelle (28) pouvant pivoter de façon orthogonale par rapport à la au moins une première lamelle (24).

8. Diffuseur d'air selon l'une des revendications 1 à 7, dans lequel des éléments de guidage d'air (40) rigides sont disposés dans la zone de l'ouverture de sortie d'air (20).
